# EUROPEAN PATENT APPLICATION

(11) **EP 1 038 432 A2**
(43) Date of publication of application: **27.09.2000**
(21) Application number: 00201047.8
(22) Date of filing: 22.03.2000
(51) Int. Cl.: A01G 9/10

(54) **Apparatus and method for dividing plant material**

(30) Priority: 22.03.1999 NL 1011638
(71) Applicant: W.J. Heemskerk & Zn., 2204 AE Noordwijk (NL)
(72) Inventor: Duivenvoorden, Martinus Fredericus Johannes, 2171 VD Sassenheim (NL)
(74) Representative: Van Breda, Jacobus

(57) **Abstract**

The invention relates to an apparatus for dividing perennial plants (2), characterized by a feed belt (1) for the perennial plants (2) to be divided, a worktable (6) adjoining the feed belt (1), a series of vertically movable reeds (3) aligned next to each other, at least part of which are horizontally movable from above the feed belt (1) to above the worktable (6), and the spacing between which reeds (3) is adjustable to facilitate the division of the perennial plants (2), and a discharge conveyor (7) for the divided perennial plants (2).

## Description

The division of plants is a labour-intensive job that in accordance with the prior art, is done manually. The reason for this is that the division of plants is an operation requiring a kind of precision that is difficult to automize. The division is performed by a combination of pulling and handling a knife sensibly in order to separate entwining plant parts. This has to be done very carefully, as incompetent handling of the knife, will inexpediently damage the plants. The work involved with the division of plants is heavy, dirty, and arduous. There has long been a need for the mechanization of plant division in order for the process becoming automized and to avoid heavy physical work. A problem is, of course, that whether it is done automatically or not, the division of plants has to fulfil the criteria of usefulness and quality to ensure that the above mentioned undesirable damage to plants does not occur. These requirements have always stood in the way of mechanized plant division. Another object of the invention is to save labour costs.

In accordance with the invention an apparatus is proposed that meets these requirements and which is characterized in that it comprises a feed belt for the perennial plants to be divided, a worktable adjoining the feed belt, a series of vertically movable reeds aligned next to each other, at least part of which are horizontally movable from above the feed belt to above the worktable, and in that the spacing between said reeds is adjustable in order to facilitate the division of the perennial plants, and a discharge conveyor for the divided perennial plants.

Using the apparatus according to the invention, perennial plants that have grown to form a large clump can, after they have been lifted, be conveyed via the feed belt for their subsequent division into portions. Preferably at least one permanent reed is provided above the feed belt, which reed is movable in vertical direction. In this way it is possible to make a division between the part of the perennial plant clump that is not yet being processed and that is lying on the feed belt, and the part that will subsequently undergo the process of division in the rest of the apparatus.

To this end the apparatus is further preferably characterized in that the reeds that move in the horizontal direction to above the worktable, are provided with an adjustment member for the lateral adjustment of the reeds whereby simultaneously their mutual spacing is increased. The plants to be divided are thus by means of the adjustable reed assembly pushed from the feed belt onto the worktable and are subsequently separated, as a consequence of a mutual adjustment of the adjacent reeds.

Preferably the reeds can be adjusted to a maximal mutual distance with the reeds being positioned evenly distributed over the entire length of the worktable. In practice it has been shown that in this way a length of, for example, one metre of perennial plants can be pulled apart into three metres of plants, resulting in an effective division of the plants.

A further preferred embodiment of the apparatus according to the invention is characterized in that in relation to each other, the reeds can be adjusted in the longitudinal direction. In this way the adjacent reeds can undergo a combined adjustment in both the lateral and the longitudinal direction, which promotes the efficiency of plant division. This can be realized particularly well with an apparatus whose adjustment member, while the adjacent reeds are being adjusted laterally, is capable of simultaneously adjusting them in the longitudinal direction.

To release the divided plants it is desirable that a pusher attachment be provided for pushing the divided plants off the reeds, and which is equipped with fingers that can be placed between the separated reeds. Preferably, the apparatus should be embodied such that the worktable can be folded away or can be moved from an operational to a non-operational position, and that the discharge conveyor is at least partially located under the operational position of the worktable. In the operational position the worktable adjoins the feed belt. By this method the divided perennial plants are deposited on the discharge conveyor as soon as they have been divided and pushed off the reed assembly, after which they can be conveyed to an optional further processing device.

The adjusting device of the reed assembly is effectively realized by an arms-and-legs-system, in which system the reeds are coupled to the system's pivoting points, and which system can be extended and folded in accordion fashion. Preferably this system is characterized in that substantially it comprises arms and legs which are at both ends of an arm or a leg pivotingly coupled with a first respectively a second further arm or leg and are pivotingly coupled with a first, respectively a second reed, and in that between the two ends it has a first intermediate pivoting point, at which position the respective arm or leg is pivotingly coupled with a third further arm or leg and a third further reed, and that it has a second intermediate pivoting point with which the respective arm or leg is coupled to yet a fourth further arm or leg.

The invention is also embodied in a method of dividing perennial plants, using the apparatus described above, which method is characterized in that the perennial plants to be divided are conveyed by means of the feed belt up close to a worktable adjoining the feed belt, in that a permanent reed and a series of adjustable reeds are pushed between the perennial plants to be divided and that the permanent reed maintains its position while the adjustable reeds with the perennial plants being retained by the reeds, are being moved in horizontal direction to above the worktable, after which the adjustable reeds are moved apart until the perennial plants are spread out over the entire length of the worktable, and in that finally, the worktable is moved from the operational position occupied until now to a non-operational position, and in that a pusher attachment pushes the divided perennial plants off the reeds so that they are deposited on a conveyor belt.

The invention will now be explained in more detail with reference to the drawings which
in the Figures 1 to 6 show the apparatus according to the invention in a number of sequentially successive processing steps for dividing perennial plants and
in the Figures 7 and 8 show in detail the adjusting member with the reed assembly coupled thereto in a folded and extended position, respectively.

Identical parts in the Figures are indicated by the same reference numbers.

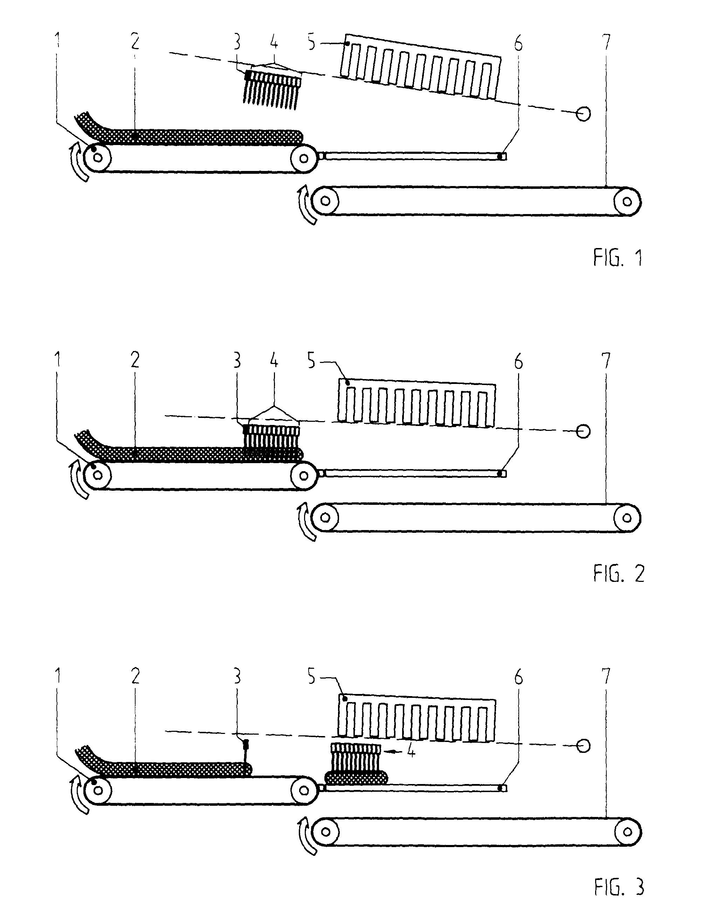

With reference at first to Figure 1, a feed belt 1 is shown on which lies a clump of perennial plants 2 to be divided. Adjoining the feed belt 1 is, in an operational position, a worktable 6, and at the side of the worktable 6, above one end of the feed belt 1 a permanent reed 3 and an adjustable reed assembly 4, are provided with which a portion of the clump of perennial plants 2 on the feed belt 1 can be processed. To this end, as shown in Figure 2, the permanent reed 3 together with the adjustable reed assembly 4 are pushed into, respectively between the perennial plants 2, the permanent reed 3 then stays positioned above the feed belt 1 and the adjustable reed assembly 4 starts to process the portion of perennial plants attached thereto, bringing it above the worktable 6, as shown in Figure 3.

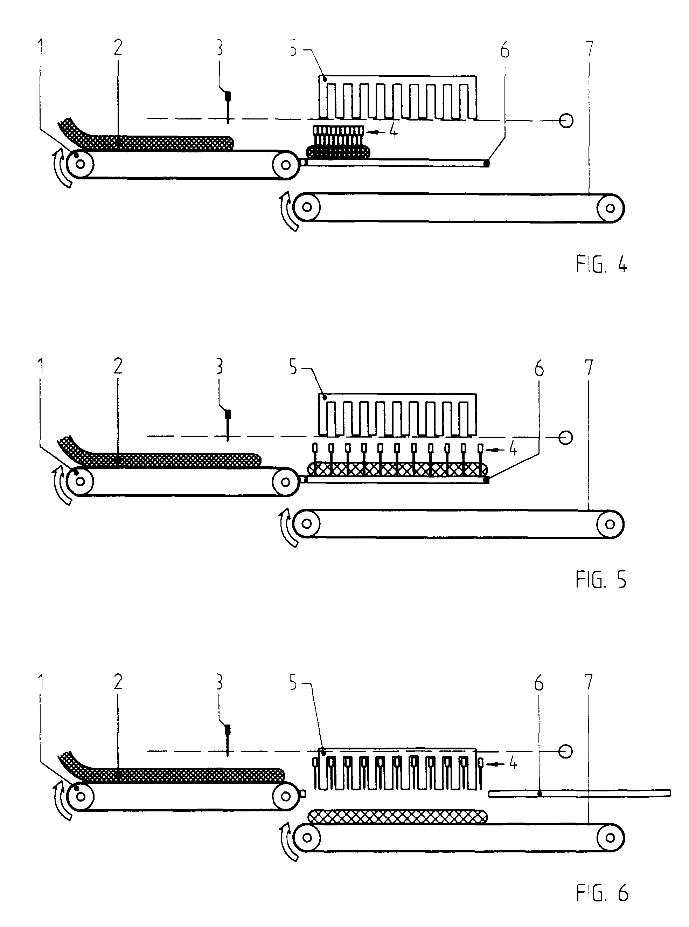

Figures 4 and 5 then show that subsequent to separating the portion of perennial plants being processed from the clump of perennial plants that are still left on the feed belt 1, the permanent reed 3 is extracted upward to allow the latter perennial plants to be moved on by the feed belt 1 in the direction of the worktable 6, while simultaneously the adjustable reed assembly 4, after having been pushed further into the clump of perennial plants 2 that is being processed, pulls it apart in order to achieve the desired division. In doing so, the reeds are moved apart so far that, in the final position, the entire length of the worktable 6 is covered with the divided perennial plants; this position is shown in Figure 5.

Subsequently, as shown in Figure 6, the worktable 6 is changed from the operational position depicted in Figures 1 to 5, to the non-operational position shown in Figure 6, and by means of a pusher attachment 5 that is provided with fingers that fit between the separated reeds of the reed assembly 4, the divided perennial plants are pushed off the reed assembly so that they are deposited on the discharge conveyor 7 for conveyance to a further processing device.

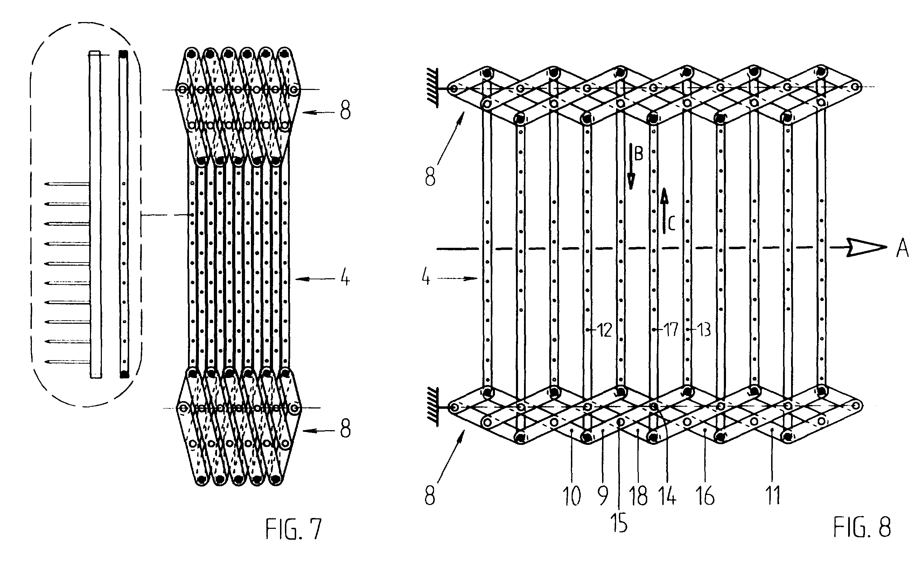

The Figures 7 and 8 show a top view of the adjustable reed assembly 4 with the adjusting member 8. By activating the adjusting member 8, the adjacent reeds of the reed assembly 4 can be moved from the folded condition shown in Figure 7, to the extended condition shown in Figure 8, and vice versa.

The adjusting member 8, is coupled with the reeds of the reed assembly 4 such that when activating the adjusting member, the distance between the reeds 4 is increased not only due to their adjustment in the lateral direction as indicated in the Figure by arrow A, but also due to their adjustment in longitudinal direction, as shown by arrows B and C. From the Figures 7 and 8 it can be clearly seen that the adjusting member 8 is embodied as an arm-and- leg-system with the reeds 4 being coupled thereto at pivoting points of said system, such that the system 8 can be extended and folded in accordion fashion.

It should be mentioned that as soon as the reed assembly 4 is above the worktable 6, one of its sides is preferably positioned to be immobile, and the rest of the reed assembly 4 is adjusted to extend away from the immobile side, thus simultaneously increasing the mutual distance between the reeds 4 forming part of the reed assembly.

The adjusting member 8, is designed such that substantially each of the arms and legs 9 is provided at both ends of an arm or a leg 9 with a pivoting coupling to a first further arm 10 and a second further arm 11, to which pivoting point also a first reed 12 respectively a second reed 13 is pivotingly coupled. In addition, between the two ends of the arm 9 a first intermediate pivoting point 14 is provided, at which position the respective arm 9 is pivotingly coupled with a third further arm 16, and that there is a second intermediate pivoting point 15 with which the respective arm 9 is coupled to a fourth further arm 18.

For dividing perennial plants 2, the apparatus is preferably used such that said perennial plants 2 are carried by means of the feed belt 1 close to a worktable 6 adjoining the feed belt 1 and being in an operational position, that subsequently a permanent reed 3 and a series of adjustable reeds 4 are pushed between the perennial plants 2 to be divided, and that the permanent reed 3 maintains its position while the adjustable reed 4 with a separated portion of the perennial plants 2 are being moved in horizontal direction to above the worktable 6, that the adjustable reeds 4 are then moved apart until the perennial plants are spread out over the entire length of the worktable 6, and that finally the worktable 6 which until now was in an operational position (see Fig. 1-5),is moved to a non-operational position (see Fig. 6), and that a pusher attachment 5 pushes the thus divided perennial plants off the reeds 4 so that they are deposited on a conveyor belt 7.

## Claims

1. An apparatus for dividing perennial plants, **characterized** in that it comprises a feed belt (1) for the perennial plants (2) to be divided, a worktable (6) adjoining the feed belt (1), a series of vertically movable reeds (3,4) aligned next to each other, at least part of which are horizontally movable from above the feed belt (1) to above the worktable (6), and in that the spacing between said reeds (4) is adjustable in order to facilitate the division of the perennial plants, and a discharge conveyor (7) for the divided perennial plants.

2. An apparatus according to claim 1, **characterized** in that at least one permanent reed (3) is provided above the feed belt (1), which reed (3) is movable in vertical direction.

3. An apparatus according to claim 1 or 2, **characterized** in that the reeds (4) that are movable in the horizontal direction to above the worktable (6), are provided with an adjustment member (8) for the lateral adjustment of the reeds (4) whereby simultaneously their mutual spacing is increased

4. An apparatus according to one of the claims 1-3, **characterized** in that the reeds (4) can be adjusted to a maximal mutual distance with the reeds (4) being positioned evenly distributed over the entire length of the worktable (6)

5. An apparatus according to one of the preceding claims, **characterized** in that in relation to each other, the reeds (4) can be adjusted in the longitudinal direction.

6. An apparatus according to one of the preceding claims, **characterized** in that the adjustment member (8), while the adjacent reeds (4) are being adjusted laterally, is capable of simultaneously adjusting them in the longitudinal direction.

7. An apparatus according to one of the preceding claims, **characterized** in that a pusher attachment (5) is provided for pushing the divided plants off the reeds (4), and which is equipped with fingers that can be placed between the separated reeds (4).

8. An apparatus according to one of the claims 1-7, **characterized** in that the worktable (6) can be folded away or can be moved from an operational (Fig. 1-5) to a non-operational position (Fig. 6), and that the discharge conveyor (7) is at least partially located under the operational position of the worktable (6).

9. An apparatus according to one of the preceding claims, **characterized** in that the adjusting device (8) is realized by an arms-and-legs-system, in which system the reeds (4) are coupled to the system's pivoting points, and which system can be extended and folded in accordion fashion.

10. An apparatus according to claim 9, **characterized** in that the system substantially comprises arms and legs which are at both ends of an arm (9) or a leg pivotingly coupled with a first (10) respectively a second (11) further arm or leg and are pivotingly coupled with a first (12), respectively a second (13) reed, and in that between the two ends it has a first intermediate pivoting point (14), at which position the respective arm (9) or leg is pivotingly coupled with a third further arm (16) or leg and a third further reed (17), and that it has a second intermediate pivoting point (15) with which the respective arm (9) or leg is coupled to yet a fourth further arm (18) or leg.

11. A method for dividing perennial plants (2) in an apparatus according to one of the claims 1-10, **characterized** in that the perennial plants (2) to be divided are conveyed by means of the feed belt (1) up close to a worktable (6) adjoining the feed belt (1) and being in an operational position (Fig. 1-5), in that a permanent reed (3) and a series of adjustable reeds (4) are pushed between the perennial plants (2) to be divided and that the permanent reed (3) maintains its position while the adjustable reeds (4) with the perennial plants being retained by the reeds (4), are being moved in horizontal direction to above the worktable (6), after which the adjustable reeds (4) are moved apart until the perennial plants are spread out over the entire length of the worktable (6), and in that finally, the worktable (6) is moved from the operational position occupied until now (Fig. 1-5) to a non-operational position (Fig. 6), and in that a pusher attachment (5) pushes the divided perennial plants off the reeds (4) so that they are deposited on a conveyor belt (7).
